# EUROPEAN PATENT APPLICATION

(11) **EP 4 002 566 A1**
(43) Date of publication of application: **25.05.2022**
(21) Application number: 20275168.1
(22) Date of filing: 12.11.2020
(51) Int. Cl.: H01M 50/22, H01M 50/231, H01M 50/273, H01M 50/282, H01M 50/289

(54) **ELECTRICAL HOUSING**

(71) Applicant: Crompton Technology Group Limited, Oxforshire, OX16 4XD (GB)
(72) Inventor: BEALE, Thomas, Carterton, OXN 3XN (GB); BERNARD, James, Turweston, Brackley, NN13 5JF (GB); PEACOCK, Paul, Solihull, West Midlands B90 4SS (GB); PETHICK, Jon, Leicestershire, LE9 6NW (GB)
(74) Representative: Dehns

(57) **Abstract**

A housing for an electrical device such as a battery, having a casing with opposing ends, the casing made of a composite material such that the housed device is surrounded by composite walls containing intumescent material which protects the outer composite materials from high temperatures generated inside the housing. An end cap is provided having a sandwich structure with a core, configured to evenly distribute compressive pre-load across a battery stack in the housing. A height adjustable end cap is also provided.

## Description

### TECHNICAL FIELD

The present disclosure relates to housings for electrical components such as batteries.

### BACKGROUND

In many electrical circuits or electrical applications, electrical parts or components are mounted in a casing or housing, to protect the component, or to isolate it from other components or surroundings, or for convenience of assembly. Batteries may also be arranged as stacks of battery cells in a housing or casing. For example, vehicle batteries typically consist of multiple battery cells in a stack. In certain situations or conditions, electrical parts or components can fail or become damaged such that they become very hot and/or leak chemicals or noxious fumes or the like which can cause damage to surrounding parts or components or to the environment or users. Even if the component is housed in a housing or casing, the extreme heat and/or emissions developed by the faulty part can radiate or leak from the housing resulting in damage not only to the component itself but also to its surroundings.

An example to illustrate the above is a battery e.g. a vehicle battery. These typically consist of multiple battery cells. A short-circuit or other electrical or heat event can cause a cell to rapidly increase in temperature. This can then heat other cells in the stack, which can cause the cell stack to disintegrate, leak noxious fumes and cause significant mechanical and thermal damage to the surrounding environment. The increase in temperature can cause adjacent components or parts to become hot. For example, temperatures inside faulty battery cells can often reach 1000 deg. C. or more, which can lead to high local air temperatures. Adjacent battery stacks could be heated by the heat from the damaged stack, causing the adjacent cells to also disintegrate, and so on.

To avoid this 'runaway' effect, it is known to separate multiple battery cell stacks from each other so that a single faulty stack will not create a runaway effect causing many other cell stacks to fail.

Housings have been developed to attempt to provide thermal isolation of stacks from the surroundings. These have been made of special materials, e.g. special polymers, that have to withstand very high temperatures. These are very expensive and can be difficult to process. Especially in harsh environments, e.g. in vehicles, such housings can be easily damaged and the use of expensive casing materials is not ideal in such environments. Stainless steel housings have also been used for use in more harsh environments e.g. in automotive vehicles but these are heavy. The additional weight of such housings is problematic in some applications e.g. in aircraft.

Another issue with battery stacks is that many types of batteries, e.g. Lithium-ion batteries require a compressive pre-load. For maximum cell stack performance, the compressive pre-load should be evenly distributed across the cell surface to ensure full contact. Typical battery housings or casings do not reliably provide an even distribution of the pre-load in an efficient, cost effective and easily manufactured manner.

Another issue is that housings are generally constructed to house a specific battery stack of a particular height. A new housing would be needed for a different stack height and so the housings are not easily adaptable to different stack heights.

There is, therefore, a need for a housing for electrical components that overcomes the above problems.

### SUMMARY

According to one aspect of the disclosure there is provided a housing for a battery stack, the housing comprising a casing to receive the battery stack, the casing being closed at one or both ends by an end cap, wherein the end cap is formed having a sandwich structure comprising a core between layers of reinforcement material arranged to evenly distribute a compressive pre-load across the battery stack in the housing.

With such a structure, it is possible for ancillary features such as vents, connector pipes, etc. to be moulded into the foam and set into the end cap whilst the reinforcement material provides a structure for the cap that evenly distributes the pre-load.

According to a second aspect of the disclosure, there is provided a housing for an electrical device, the housing comprising a casing configured to enclose the device, the casing having a composite structure having an exterior surface formed of a first material and an interior surface comprising a second different material comprising an intumescent material.

The first material is preferably a fiber reinforced material e.g. a carbon fibre composite layer.

Optionally, the casing defines side walls forming an interior to house the device and further comprising opposing end walls. One or both of the opposing end walls can formed by an end cap such as defined in the first aspect, in which ancillary features can be mounted. The end cap optionally comprises a core e.g. made of foam, for the ancillary features, surrounded by a reinforcing material.

The intumescent material may be provided as a layer on the casing interior surface and/or on the interior surface of the end cap(s).

A locating structure may be provided on the end cap to locate the device in the housing.

A seal or joint may be provided between the end cap(s) and the side walls.

According to a third aspect, there is provided a housing for a battery stack, the housing comprising a casing to receive the battery stack, the casing being closed at one or both ends by an end cap, wherein the end cap is provided with a variable joint to enable the cap to be hermetically sealed within the casing at variable heights.

According to a fourth aspect, there is provided a method of manufacturing a housing for an electronic device, the method comprising forming a casing defining an interior to house the device, providing an intumescent material on the interior of the casing.

Forming the casing optionally comprises forming an exterior of the casing of a reinforcement material and forming the interior of the casing with a layer of the intumescent material.

Ends (particularly end caps) may be provided to close the interior. The end caps may comprise a core e.g. a foam core and an exterior of reinforcement material and a layer of intumescent material on an interior surface.

The electrical device may be e.g. a battery stack or other component liable to generating high temperatures or other emissions.

### BRIEF DESCRIPTION OF THE DRAWINGS

Figure 1 is a simple schematic showing how a failed battery cell can cause thermal runaway in a battery stack.
Figure 2A is a perspective view of a housing according to the disclosure.
Figure 2B shows a section through the housing of Fig. 2A.
Figure 3 is a sectional view of a housing according to the disclosure.
Figure 4 is a section view of an end cap of a housing according to the disclosure.
Figure 5 is a simple view showing a possible structure of part of a housing according to the disclosure.
Figure 6 is a section view of a housing according to the disclosure
Figure 7 is a view of the housing of Figure 6 as temperatures inside the housing increase.
Figure 8A shows a detail of a housing according to the disclosure.
Figure 8B shows the detail of Fig. 8A in a different configuration.

### DETAILED DESCRIPTION

The following description, which is given by way of example only, describes the housing for use as a battery housing. The housing could, however, also be used and be advantageous for other electrical and electronic parts and components and the disclosure is not limited to battery housings.

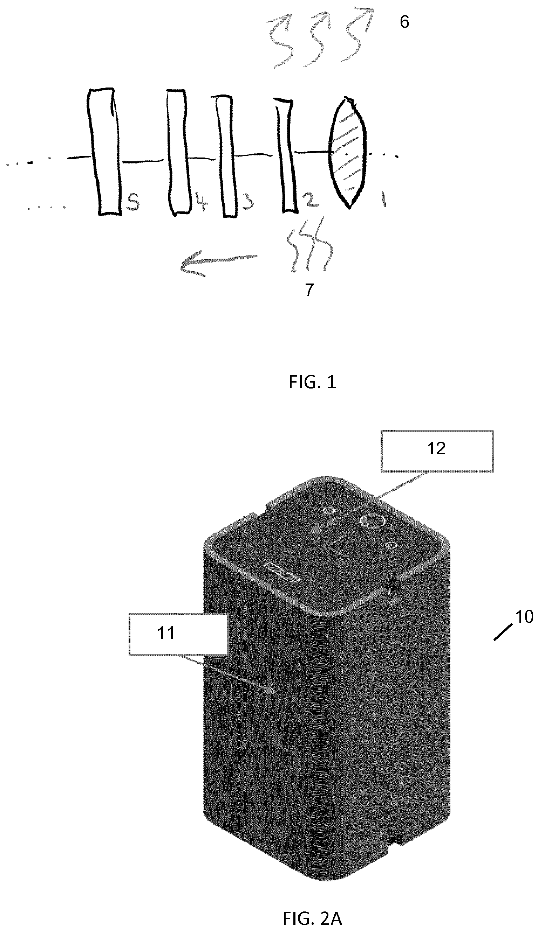

As mentioned above, short circuits or other failure events in electrical or electronic components or parts can cause thermal or chemical responses whereby high temperatures and/or fumes or leaks occur which can affect other nearby components, parts, surroundings or personnel. Fig. 1, for example, shows a multi-cell battery having, here, five battery cells 1, 2, 3, 4 and 5 arranged in a stack. If one cell (here cell 1) fails, this can overheat and the heat 7 generated can extend to the adjacent cell, 2, triggering failure of that cell, and so on, which can cause the entire stack to disintegrate. Further, the heat can radiate out into the environment causing damage there. Damage to the cells can also release noxious fumes 6 which can be released into the surroundings.

Similar problems can occur with other electrical components that can overheat in the event of a fault.

According to the disclosure, a housing is provided for an electrical component e.g. a battery or battery stack, to prevent the effects of damage to the component having adverse effect on the surrounding structures and environment around the component.

Preferred embodiments of the housing will be described with reference to the remaining figures.

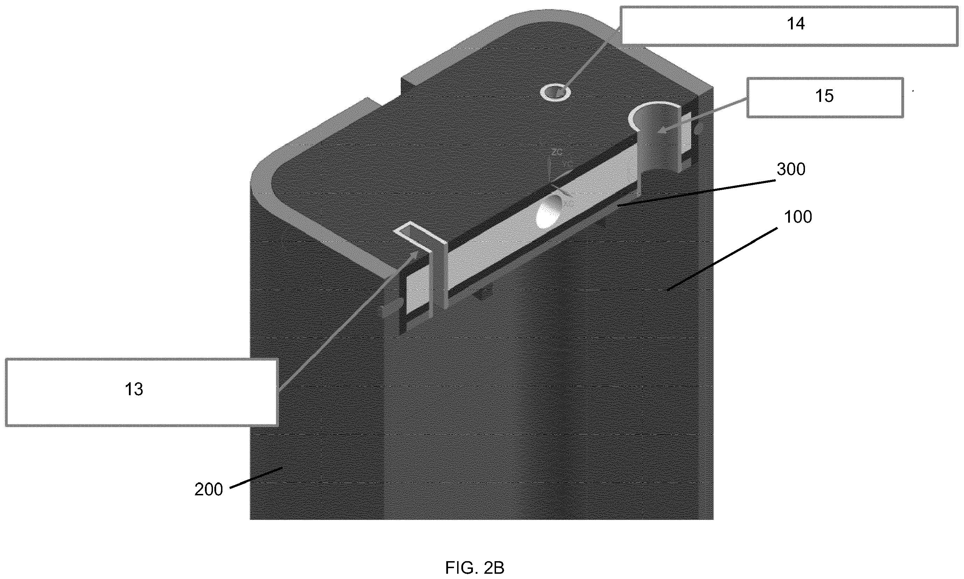

Referring first to Figs. 2A and 2B, the housing 10 comprises a casing 11 defining an interior 100 to contain the component to be housed (not shown), the interior being defined by side walls 200 and opposing end walls 300. One or both of the end walls may be formed as an end cap 12. The end cap(s) 12 can be formed with features 13, 14, 15 to receive wires or connectors or other parts such as cooling pipes, vents or exhausts etc. depending on the type of, and use of the component to be housed. The housing should be designed to be of a suitable size and shape to adequately house the component in question in a secure and sealed manner.

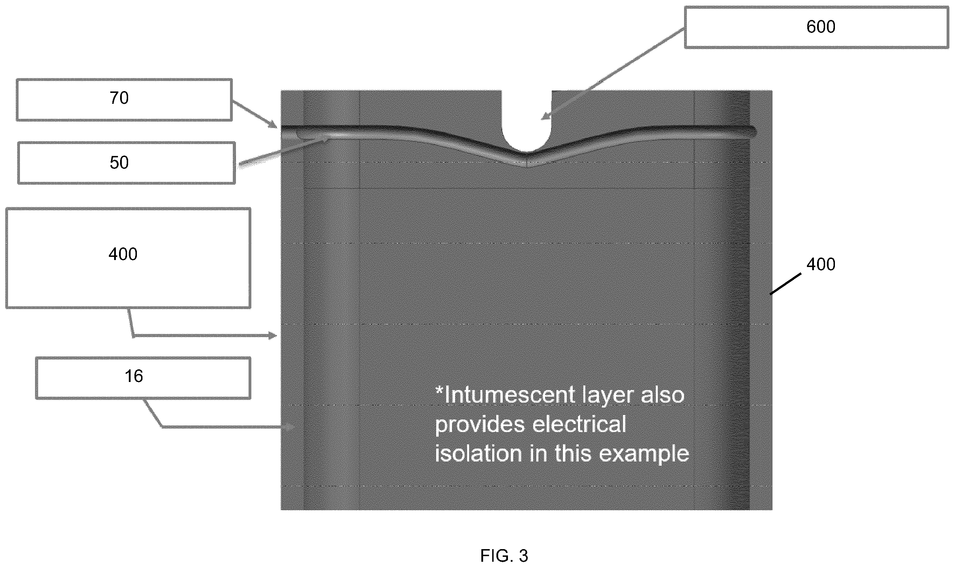

As seen in Fig. 3, the housing 10 is provided with a layer of intumescent material 16. This is provided on a part of the casing 11 side walls and/or end walls facing toward the interior 100 of the housing. Intumescent material is a material or substance that swells as a result of heat exposure. In the example shown, the intumescent material is provided as an inner layer on the casing 11 on the surface defining the side walls of the housing interior 100. Other locations or arrangements of the intumescent material are also envisaged provided such material is provided at a location between the interior and the exterior 400 of the housing. The exterior of the housing is a surface of the housing facing away from the interior 100 and to the environment around the component.

If a component mounted in the housing suffers a failure event that causes it to heat up (as shown for example in Fig. 1) the temperature in the interior 100 of the housing will increase. This may be a rapid increase e.g. in the case of thermal runaway as explained above with reference to Fig. 1.

At a critical temperature, the intumescent material 16 will expand. As this expansion absorbs the increased heat inside the housing, the outer parts of the housing will not heat to such extreme temperatures as would have been the case without the intumescent material. This means that simpler, less expensive materials can be selected for the exterior parts of the housing as they do not need to be selected for very high temperatures.

In examples, the exterior 400 of the housing is formed of a composite material such as a reinforcement material as such materials are strong, light, inexpensive and easily formed and processed. The use of such materials is made possible by the fact that the housing has an inner layer or portion of intumescent material to take up the heat generated by the component. Because of this, the reinforcement material stays at a low enough temperature to still be structurally effective. A type of reinforcement material found to have particular advantages where weight is an important factor e.g. in aircraft, is unidirectional (UD) carbon fiber reinforcement material. Carbon fibers are advantageous over e.g. glass, as they have lower weight and improved stiffness and strength. Carbon fibers can be braided quickly to form a high quality composite structure. Because of the lower temperature requirement for the outer material, matrix material can be used with a higher strain-to-failure ratio which helps maintain sealing and avoid cracking.

In one example, the intumescent material can be provided as a layer laminated around the interior surface of the casing 11. The exterior of the housing may be, for example, a filament-wound or braided dry preform that can be deposited over the intumescent layer when forming the housing.

Various intumescent materials are known and can be used for the housing of this disclosure. The material can be conductive or non-conductive. If an electrically non-conductive material is used as the intumescent material, this layer will provide electrical isolation for the component as well as thermal isolation. Alternatively, if a conductive intumescent material is use, an additional non-conductive layer can be provided to provide electrical isolation.

Depending on its purpose, the casing can have any tubular-type cross-section and may vary along its axis.

In the case of batteries, e.g. lithium-ion battery cell stacks, additional features can be provided to further improve the housing. Lithium-ion battery cell stacks require a compressive pre-load. For maximum cell stack performance, this compressive pre-load should be distributed evenly across the cell surface to ensure full contact. The housing of this disclosure can be designed with ends caps configured to maintain the required compressive pre-load. These end caps may also be used in other types of housings for battery stacks and are not necessarily limited to use with housing having intumescent material as described above.

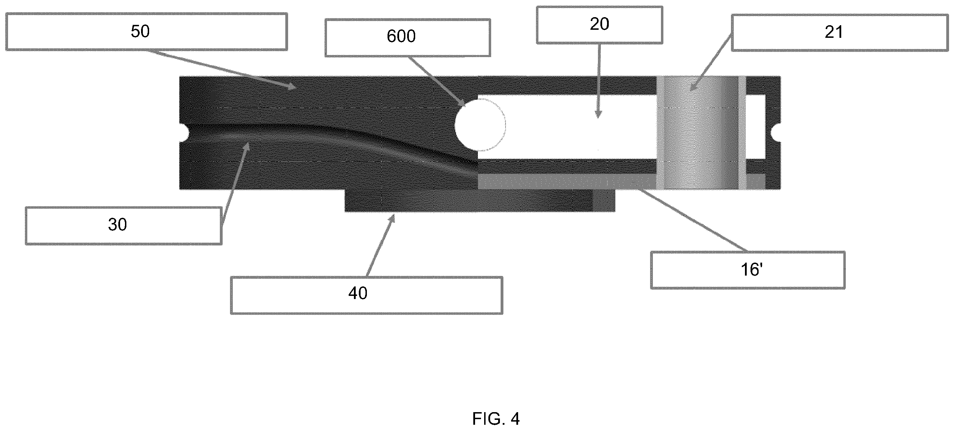

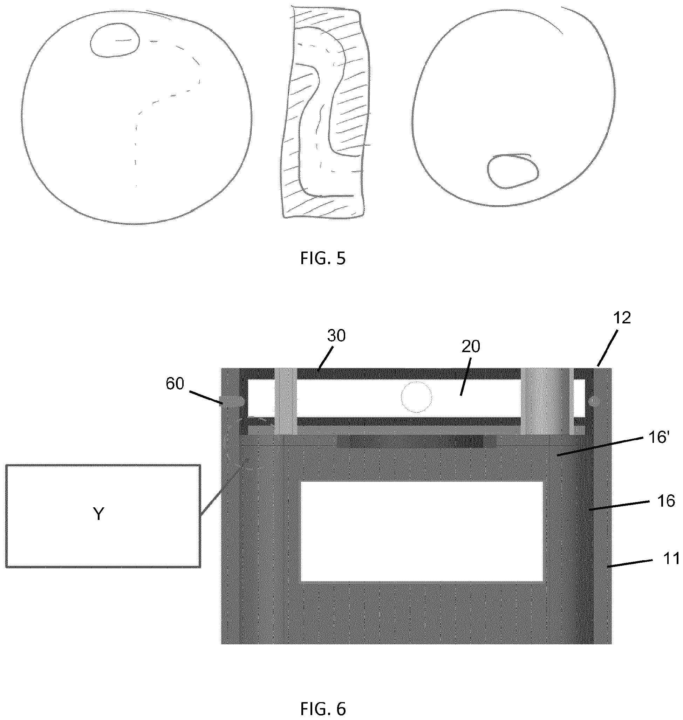

In the preferred arrangement, the end walls are defined by end caps 12 and, in an example where the end caps are designed to ensure the compressive pre-load is maintained, the end cap may have a sandwich structure, best seen in Fig. 4., formed of a core 20, e.g. a core of foam/liquid foam, within an outer reinforcing structure. The core is soft and workable so that it is able to have ancillary features moulded into it, e.g. vents 21, electrical connectors, pipes etc. When the core is set it will then contain the ancillaries. The core allows for complicated wiring and venting/pipework without the need for complex fixtures in the core or housing (see Fig. 5). The core material e.g. foam also provides some additional thermal insulation. The outer reinforcing structure 30 provides rigidity to the end cap 12 and this maintains the compressive pre-load on the stack inside the housing. The end cap is thus reinforced where it may be subjected to external loads, vibration etc. This structure 30 may be made reinforcing fibers e.g. using unidirectional (UD) fabric reinforced layers. A cell stack location feature 40 can ensure correct position of the stack relative to the housing/end cap to ensure even distribution of the pre-load and the provide stability to the component.

Intumescent material 16' may be provided on the inner surface (facing the housing interior 100) of the end cap in addition to or instead of being provided on the side walls of the casing. One or both ends of the housing may be formed with such an end cap 12.

A groove or channel 50 may be provided in the end cap for sealing purposes as described further below. A mounting point 600 is provided for assembling the housing.

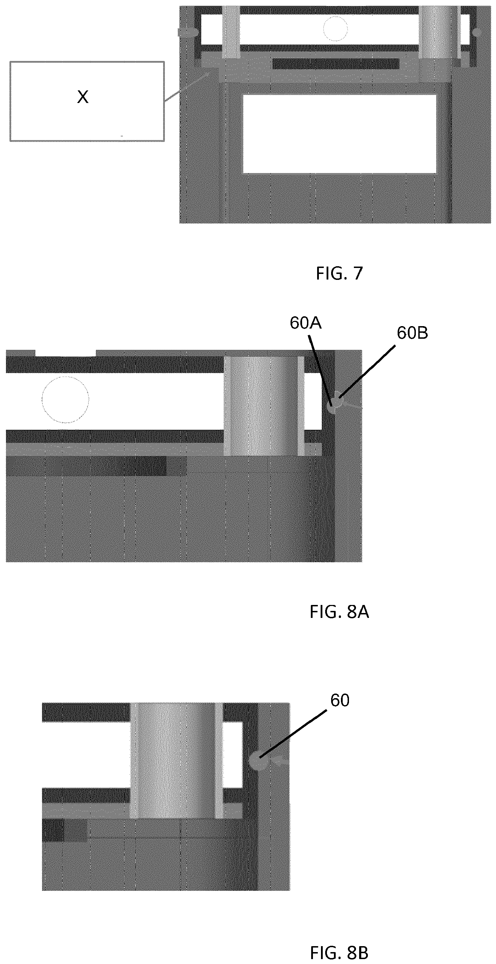

To further improve the isolation properties of the housing, the housing may be provided with a seal or joint assembly 60, best illustrated in Figs. 8A and 8B, to ensure effective hermetic sealing between the end cap 12 and the rest of the housing. This sealing arrangement may also be used in other types of housing than that described above and is not limited to use in housings have intumescent material. One joint or seal groove 60A is provided on the end cap 12 and a cooperating seal or joint groove 60B is provided on the casing side wall such that the two grooves cooperate when the end cap is in place. Figure 8B shows when the seal grooves are 'perfectly' aligned. In Fig. 8A, it can be seen that the seal can accommodate variations in the height of the component in the housing e.g. the cell stack height, by overlapping of the grooves. When the end cap is properly positioned, an adhesive or sealing material is injected e.g. via an injection port 70, to fill the cavity formed by the cooperating grooves 60A, 60B. The adhesive or sealing material can be injected, during assembly of the housing, through the groove/channel 50 mentioned above and shown in Fig. 4. Sealing can also be provided in other ways, e.g. by means of an elastomeric material in place of the grooves 60A,60B.

In the examples shown, as the intumescent material expands (Fig. 7), thus protecting the outer layers from extreme heat, the material can be arranged to overlap at the corners of the housing (see X in Fig. 7) to also protect the seals and joins between the casing and the end cap. In this example, when the housing is assembled, a gap (Y in Fig. 6) is provided to allow the end cap 12 to be properly mounted into the casing 11. This gap closes (Fig. 7) as the intumescent material expands, causing the overlap X.

A method of assembling the housing of the disclosure will now be described, by way of example.

The casing 11 may be formed laminated with a layer of intumescent material on the interior side and the outer material e.g. in the form of a preform such as a filament-wound or braided dry preform deposited over that to form the exterior of the housing. The entire casing may then be formed into a homogenous structure e.g. by resin-transfer moulding or using other forms of resin transfusion. The casing is then assembled with the end caps to maintain the pre-load, where appropriate, on the component in the housing.

One way of forming end caps is to form the ancillary structures in the foam core e.g. by injecting the foam around the ancillaries and the foam is set. Reinforcing material e.g. woven fabric layers, is provided around the foam and a layer of intumescent material is provided in the interior surface of the end cap. Again, the cap is then formed into a homogenous part by resin-transfer moulding or using other forms of resin transfusion.

The end cap(s) 12 is/are fitted into the ends of the casing 11. The end cap(s) may be sealed and secured by e.g. injection of a quick-setting compound to form a mechanical lock. This may also double as a seal to prevent noxious fumes escaping from the housing. Alternatively, a separate seal can be added.

The adhesive lock and seal should be positioned exterior of the intumescent layer(s), where the structure is sufficiently insulated, to prevent the locking/sealing compound being heated and melting.

Alternatively, mechanical joints e.g. rivets, bolts etc. or other types of bonding joining techniques may be used.

The housed component is thus surrounded by composite walls containing isolating and insulating intumescent material which protects the outer composite materials from high temperatures generated inside the housing. The housing is lightweight and inexpensive to manufacture.

Almost all of the manufacturing steps can be automated e.g. via pick-and-place robotics, thus reducing lead time and costs.

## Claims

1. A housing for a battery stack, the housing comprising a casing (11) to receive the battery stack, the casing being closed at one or both ends by an end cap (12), wherein the end cap is formed having a sandwich structure comprising a core (20) between layers of reinforcement material (30) arranged to evenly distribute a compressive pre-load across the battery stack in the housing.

2. A housing for an electrical device, the housing comprising a casing (11) configured to enclose the device, the casing having a composite structure having an exterior surface (400) formed of a first material and an interior surface comprising a second different material comprising an intumescent material (16).

3. A housing for a battery stack, the housing comprising a casing (11) to receive the battery stack, the casing being closed at one or both ends by an end cap (12), wherein the end cap is provided with a variable joint (60A, 60B) to enable the cap to be hermetically sealed within the casing at variable heights.

4. The housing of any preceding claim, wherein the casing defines side walls (200) forming an interior (100) and further comprising opposing end walls (300).

5. The housing of claim 4, wherein one or both of the opposing end walls is formed by an end cap (12).

6. The housing of claim 2, or any claim dependent thereon, wherein the first material comprises a fiber reinforced material, and optionally wherein the first material is a carbon fiber reinforced material.

7. The housing of claim 2 or 3, or any claim dependent thereon, wherein the end cap (12) comprises a core (20) surrounded by a reinforcing material (30).

8. The housing of claim 7, wherein ancillary features are captive in the core (20).

9. The housing of claim 2 or any claim dependent thereon, wherein the intumescent material (16) is provided as a layer on the casing interior surface.

10. The housing of claim 5 when dependent on claim 2, or any claim dependent thereon, wherein the intumescent material (16') is provided as a layer on a surface of the end cap (12) directed towards the interior of the housing (10).

11. The housing of claim 1 or 5 or any claim dependent thereon, further comprising a locating structure (40) on the end cap to locate the device in the housing.

12. The housing of claim 1 or 5 or any claim dependent thereon, further comprising sealing means (60) between the end cap(s) and the side walls.

13. A method of manufacturing a housing for an electronic device, the method comprising forming a casing defining an interior to house the device, providing an intumescent material on the interior of the casing.

14. The method of claim 13, wherein forming the casing comprises forming an exterior of the casing of a reinforcement material and forming the interior of the casing with a layer of the intumescent material.

15. The method of claim 12 or 13, further comprising providing ends to close the interior, one or both of the ends being provided as an end cap (12).

16. The method of claim 15, wherein the end cap comprises a core and an exterior of reinforcement material and a layer of intumescent material on an interior surface.

17. The housing of claim 1 or 7 or the method of claim 16, or any of the claims dependent thereon, wherein the core is a foam core.
